# EUROPEAN PATENT APPLICATION

(11) **EP 1 266 580 A1**
(43) Date of publication of application: **18.12.2002**
(21) Application number: 01113529.0
(22) Date of filing: 12.06.2001
(51) Int. Cl.: A23L 1/22, A23G 1/00, A23G 3/00

(54) **Sequential flavour release**

(71) Applicant: Kraft Foods R&D, Inc., 81737 Munich (DE)
(72) Inventor: Tischler, Michael, Dr., 79650 Schopfheim (DE)
(74) Representative: HOFFMANN - EITLE

(57) **Abstract**

The present invention is directed to a flavour composition comprising a boosting flavour component and at least one delayed-release flavour component which can be used in a confectionery product. The individual flavour components generate a combined organoleptic effect which may be different from the addition of the individual organoleptic impressions and which is an unexpected surprise to a consumer e.g. when eating a confectionery product or a comestible containing such a flavour composition.

## Description

The present invention relates to flavour compositions and to their use for the generation of combined organoleptic effects. According to a second aspect, the present invention pertains to confectionery products comprising said flavour compositions.

In the food industry, it is a common measure to add flavour components to food which generate taste and odour impressions. The knowledge gained in this field has also been utilized in the manufacture of confectionery products, such as pralines, chocolate and sweets, as well as for chewing gum, beverages, bakery, and ice cream. Flavour components often comprise highly volatile compounds. To prevent these compounds from evaporating too rapidly (i.e. premature release), specific additives, so-called fixatives, may be added. Recently, (micro)encapsulation and immobilization of flavour components was described as another method to inhibit flavour loss during production and storage due to undesired release, e.g., by evaporation. Such encapsulated or immobilized flavour components have been applied to chewing gums. Thus, some flavour components contained in the chewing gum are initially odour- and tasteless, and are not released until the chewing gum is subjected to mechanical impact and/or dissolution in the saliva by chewing in the mouth of the consumer.

As indicated above, flavours have the potential to increase the enjoyment of food, since they provide the consumer with taste and odour impressions. In view of this paramount importance of flavours to the acceptance of food, the food industry, and in particular the flavour industry is continuously seeking to provide new and improved flavour components and release forms.

It is therefore an object of the present invention to provide flavour compositions for use in food which evoke exiting new odour and taste experiences for the consumer.

According to the present invention, this object is solved by a flavour composition comprising a boosting flavour component and at least one delayed-release flavour component.

The term "flavour component" as used in the present application refers to all substances causing an overall organoleptic effect, i.e. a taste and/or odour impression. This term also encompasses a mixture of two or more substances having such property. Flavour components according to the present invention may be any natural, nature-identical and artificial flavour components. It is well known to the person skilled in the art that particularly natural flavours comprise a mixture of two or more substances resulting in the characteristic flavour.

Preferably, the flavour components for use in the present invention are manufactured in compliance with "Good manufacturing Practice" (GMP), i.e. they are free from genetically modified organisms and as well as from potential allergens.

Typical examples of flavour components according to the present invention are coconut aroma, pineapple aroma or other fruit aromas.

The term "flavour" as used herein refers to the sensory, i.e. odour and/or taste impression by the consumer caused by the release and perception of flavour components.

In the present specification, the term "boosting flavour component" means that flavour component which is the first to be released among the flavour components contained in the flavour composition according to the invention. The boosting flavour component is perceived as a taste upon eating. As is known in this field; the odour of a flavour component may also (an in many cases will) contribute to the overall organoleptic effect.

The boosting flavour component results in a fast and intense organoleptic effect upon intake of the flavoured product into the mouth, preferably immediately upon intake, as compared to the delayed-release flavour component. Depending on the flavoured product, the boosting flavour component may be released only after chewing the product. The boosting flavour component may be in any form, such as liquid, powdered, or spray-dried. However, in view of the desired fast and intense organoleptic effect, the boosting flavour component is preferably a liquid flavour component. Chocolate is not suitable as a boosting flavour component in flavour compositions according to the present invention, since it does not generate a fast and intense organoleptic effect but rather acts as a basic flavour component. Therefore, chocolate is excluded from the boosting flavour components according to the present invention.

Examples for suitable boosting flavour components are those as exemplified above for the flavour components in general. Preferably, fruity compounds with carrier liquids, e.g. esters, are used.

The delayed-release flavour component is a flavour component which is only released after the lapse of a predefined delay after the release of the boosting flavour component.

The delayed-release flavour component is not restricted in kind, as long as it is different from the boosting flavour component and is released and perceived after a delay with respect to the release and perception of the boosting flavour component. As in the case of the boosting flavour component, the delayed-release flavour component may also comprise a mixture of two or more substances resulting in the characteristic flavour. In general, the same flavour components usable as boosting flavour components may be used as delayed-release flavour components, depending on the appropriate formulation as, for example, described below.

The delayed-release flavour component is preferably formulated as an encapsulated flavour component.

In the present application, the term "encapsulated flavour component" refers to the following flavour components:
1) those which are surrounded by a shell, and/or
2) those which are enclosed in a matrix in finely divided form (e.g. in the form of ultra-fine flavour droplets).

Encapsulated flavour components of type 1 are formed by coating them with substances such as gelatine, agar agar and gum arabic to give capsules and/or microcapsules. In many cases the encapsulation technology known from the pharmaceutical industry can be adapted and used for this purpose. For example, the flavour can be coextruded with the coating material. In the coextrusion method, the flavour and the coating material both have to be in liquid form and hence they are dissolved in a suitable solvent, if necessary. Occasionally, the coextrusion nozzle is subjected to an ultra-sound field in this process. A modification of the coextrusion method is the so-called submerged nozzle process wherein gelatine capsules in the millimetre range enclosing droplets of flavour components are produced. Significantly smaller capsules (typical size about 0.1 mm) can be obtained by means of coacervation using gelatine and/or gum arabic as typical capsule materials.

There are various approaches to the preparation of encapsulated flavour components of the type 2 as defined above.

One method is based on spray coating. In this method, a suitable carrier is dissolved in water, then the flavour component is added, followed by homogenizing the obtained mixture and subjecting it to a spray drying treatment. Suitable carrier materials include gelatine, modified dairy proteins, modified starches, maltose or gum arabic. Those carriers prevent the flavour compounds from evaporating during the spray drying process. The thus-obtained spray-dried particles containing a flavour component may optinally be subjected to a compaction and/or agglomeration step.

An encapsulated type 2 flavour component can also be prepared by spraying a flavour component onto a support material. Preferably, the flavour component is applied in the form of a liquid preparation which is dried after spraying it onto the support. Optionally, the supported flavour component is subsequently coated to prevent premature release of the immobilized delayed-release flavour component upon intake of the flavoured product. The support and coating materials for the manufacture of immobilized flavour components are not particularly limited. Examples of suitable support materials are sugars, dextrins, (e.g. maltodextrins), modified and natural starches and cellulose derivatives. Examples of coatings may be represented by sugars, fats, agar agar and gum arabic.

Recently proposed methods for the preparation of encapsulated flavour compounds of the above type 2 are fluid bed methods and extrusion.

The fluid bed methods have some similarity to the spray drying methods described above. However, capsules having a narrower particle size distribution can usually be obtained with the fluid bed methods.

In extrusion methods, the carrier materials are basically processed into glassy systems enclosing the flavour compounds. EP-A-1 034 705 for example is concerned with an embedding agent for flavour and aroma compounds comprising a carrier, which allows the incorporation of flavour and aroma compounds in an amount as high as 30 wt.% during the extrusion. According to this document, the embedding agent preferably consists of a carbohydrate matrix comprising maltodextrin, saccharose/lactose and glucose, and the the carrier is preferably selected from cellulose ethers and finely distributed silicic acid.

Methods such as molecular inclusion (e.g. in β-cyclodextrin), liposome and alginate encapsulation, cocrystallization and interfacial polymerization may also be used for preparing the encapsulated delayed-release flavour components of the type 2.

Basically all flavour components given as examples in the introductory passage of the present specification may be encapsulated as described above. However, due to the ease of manufacturing, less volatile flavour substances (i.e. those having a volatilization temperature of above 40°C) are favourably formulated as delayed-release flavour components by means of encapsulation.

Depending on the specific type of flavour component, it may be preferable to use either one of the above encapsulation techniques or a combination of them.

The encapsulated flavour components may be released by dissolution, change in pH, enzymes and/or the impact of mechanical forces. Preferably, the flavour components are released in the mouth cavity of the consumer, where the release of the delayed-release flavour may be effected by dissolution in the saliva and/or by chewing.

The delay between the release of the boosting flavour component and release of the delayed-release flavour component is defined as the period between the time of maximum organoleptic effect of the boosting flavour component and the time of maximum organoleptic effect of the delayed-release flavour component upon intake of the flavoured product into the mouth of the consumer. If more than one delayed-release flavour component is used, the time of the first maximum organoleptic effect (of one of the delayed-release flavour components) is used in the definition of the delay. Accordingly, the delay time will depend on the specific combination of boosting flavour component and delayed-release flavour component(s).

The delay time is not particularly limited as long as the boosting flavour component and the delayed-release flavour component can be identified as separate flavours. Furthermore, the delay must not be such that the maximum organoleptic effect of the delayed-release flavour component occurs when the organoleptic effect of the boosting flavour component has dropped below its threshold value for perception.

The delay time can be determined by identifying the time of the maximum organoleptic effect of the separate flavour components by means of a sensory evaluation within a group of consumers.

The delay time is preferably in the range of from 2 to 10 seconds, more preferably 4 to 8 seconds, most preferably about 6 seconds.

The delay time can be adjusted as appropriate by various means, depending on both the specific boosting flavour component and delayed-release flavour component(s) used, for example by selecting appropriate film forming, encapsulating substances, the thickness of the encapsulating layer or the dosage of the flavour in the case of encapsulated delayed-release flavour components. As concerns immobilized delayed-release flavour components, the type and thickness of the applied flavour component layer and/or the coating layer as well as the type of the support material can be used to control the delay time.

Preferably, the delay time is such that after the perception of the delayed-release flavour component, a combined organoleptic effect of the flavour components which are present in the flavour composition is perceived. Hence, the present invention refers to a sequential release of flavours. That is, the release and perception of the boosting flavour, the subsequent release and perception of the first delayed-release flavour, optionally the subsequent release and perception of the remaining delayed-release flavours, and the simultaneous or subsequent perception of a combined organoleptic effect of the individual flavour components are within the scope of the present invention. Desirably, the above combined organoleptic effect occurs after the maximum organoleptic effect of the delayed-release flavour component(s).

In a further preferred embodiment of the invention, the boosting flavour component and the delayed-release flavour component(s) are selected such that the combined organoleptic effect of the flavour components is different from the addition of the individual organoleptic effect of each of the constituting flavour components. That is, the present invention encompasses the use of a flavour composition for the generation of a combined organoleptic effect which is either (a) the addition of the individual organoleptic effects of the single flavour components or (b) different from the simple addition of these individual organoleptic effects.

In this way, new and surprising sensory impressions upon consumption of flavoured products can be generated. Alternatively, it is possible to firstly evoke separate, known sensory impressions which subsequently combine to an also known, but (in view of the separate flavours) unexpected organoleptic effect.

Suitable flavour components giving a combined organoleptic effect are coconut aroma and pineapple aroma combining to generate a Pina Colada flavour. Further examples of combined organoleptic effect are the following (the individual flavour components are given in parentheses, the first-mentioned component being the boosting flavour component): Christmas flavour (apple + cinnamon), café au lait (coffee + cream), stracciatella (cream vanilla + chocolate), café conetto (coffee + amaretto), Irish cream (coffee + vanilla + whisky), cherry colada (cherry, pineapple, coconut) and Peach Melba (peach + raspberry). Needless to say that the present invention is not limited to these examples.

The flavour composition according to the invention may be used in food products such as baked goods, sweets or ice cream. Preferred flavoured products are confectionary products, especially those containing chocolate, such as pralines. Such confectionary products may contain a basic flavour component in addition to the boosting and delayed-release flavour components. The basic flavour component generates a background organoleptic effect, which may be perceivable upon unwrapping the confectionery product and which is usually constantly present upon consumption of the product.

In confectionary products made from chocolate mass, the flavour composition according to the invention is preferably contained in the filling ("countline filling"), but may be inserted into chocolate as well. The chocolate is then the basic flavour component as explained above.

According to a preferred embodiment, the present invention is concerned with a flavour or food composition comprising a plurality of flavour components. These flavour components have first and second organoleptic effects, At least one of the flavour compounds gives rise to the first organoleptic effect without delay after ingestion of the composition, whereas at least one of the other flavour components has been modified in such a way that the onset of the second organoleptic effect is delayed for 2 to 10 seconds after ingestion of the composition. The flavour or food composition as a whole gives rise to a third organoleptic effect which is perceived to occur after the onset of the second organoleptic effect and which is caused by the combination of the first and second organoleptic effects.

As explained above, the third organoleptic effect is preferably different from the simple addition of the first and second organoleptic effects and as such is surprising to the consumer.

The modified flavour component in the above flavour or food composition is preferably an encapsulated flavour component as defined above.

The above flavour or food composition comprising a plurality of flavour components may be contained in a comestible. A comestible of this kind is also within the scope of the present invention. When this is chewed, the flavour component/components giving rise to the second organoleptic effect is/are released.

In addition to the flavour composition according to the invention, the flavoured product may also comprise inclusions. Inclusions are, for example, cereal crisp, nuts, almonds etc. These inclusions can serve to enhance the perception of the flavour, to render the texture of the flavoured product more interesting and pleasant to the consumer, and to stimulate the release of the flavour components upon chewing.

The present invention will now be described in more detail by reference to an Example. It has to be understood that the invention is not limited to this example.

### Example

A liquid coconut aroma as the boosting flavour component along with an encapsulated pineapple aroma were mixed with basic filling mass to give a filling which was subsequently enclosed in a chocolate shell to give a praline or countlines which was then wrapped in an aroma-sealing packing.

Upon unwrapping the praline a slight coconut aroma was perceivable. Upon biting into the praline, the coconut aroma was released immediately and perceived as a strong organoleptic effect by the consumer. After the perception of coconut aroma had decreased, but not disappeared, the pineapple aroma was released upon continuous chewing and reached the maximum flavour impression after a delay time of about 6 seconds after the maximum organoleptic effect of coconut. Finally a Pina Colada aroma as an adjusted mixture developed and was perceived as a surprising flavour by the consumer.

## Claims

1. Flavour composition comprising a boosting flavour component and at least one delayed-release flavour component.

2. Flavour composition according to claim 1, wherein the boosting flavour component is a liquid flavour component.

3. Flavour composition according to claims 1 or 2, wherein the at least one delayed-release flavour component is an encapsulated flavour component.

4. Flavour composition according to any one of claims 1 to 3, wherein the flavour composition is adapted such as to release the flavour components in the mouth cavity.

5. Flavour composition according to any one of the preceding claims, wherein the delayed-release flavour component is released after a delay time of from 2 to 10 seconds after the release of the boosting flavour component.

6. Use of a flavour composition according to any one of the preceding claims for the generation of a combined organoleptic effect of the flavour components.

7. Use according to claim 6, wherein the combined organoleptic effect of the flavour components is different from the addition of the individual organoleptic effect of the boosting flavour component and the delayed-release flavour component(s).

8. Confectionery product comprising a flavour composition according to any one of claims 1 to 5.

9. Confectionery product according to claim 8, further comprising a basic flavour component.

10. Confectionery product according to claim 9, wherein the basic flavour component is chocolate.

11. A flavour or food composition comprising a plurality of flavour components, the components having first and second organoleptic effects, wherein at least one of the compounds gives rise to the first organoleptic effect without delay after ingestion of the composition, and at least one of the other flavour components has been modified in such a way that the onset of the second organoleptic effect is delayed for 2 to 10 seconds after ingestion of the composition, the composition as a whole giving rise to a third organoleptic effect which is perceived to occur after the onset of the second organoleptic effect and which third organoleptic effect is caused by the combination of the first and second organoleptic effects.

12. A flavour or food composition according to Claim 11, wherein the modified flavour component is an encapsulated flavour component.

13. A comestible comprising a composition according to Claim 12, chewing of which causes release of the flavour component(s) which give(s) rise to the second organoleptic effect.
